# EUROPEAN PATENT SPECIFICATION

(11) **EP 1 989 792 B1**
(45) Date of publication and mention of the grant of the patent: **22.09.2010**
(21) Application number: 06723017.7
(22) Date of filing: 10.02.2006
(51) Int. Cl.: H04B 7/10, H04B 7/06, H04B 7/08

(54) **A WIRELESS COMMUNICATIONS DEVICE WITH IMPROVED ANTENNA ADAPTIVITY**
DRAHTLOSE KOMMUNIKATIONSEINRICHTUNG MIT VERBESSERTER ANTENNENADAPTIVITÄT
DISPOSITIF DE COMMUNICATION SANS FIL A CAPACITE D'ADAPTATION AMELIOREE DE L'ANTENNE

(43) Date of publication of application: 12.11.2008
(73) Proprietor: Telefonaktiebolaget LM Ericsson (publ), 16483 Stockholm (SE)
(72) Inventor: JOHANSON, Martin, SE-43168 Mölndal (SE); PETERSSON, Sven, S-433 69 Sävedalen (SE); JOHANNISSON, Björn, SE-434 31 Kungsbacka (SE); ASPLUND, Henrik, SE-117 34 Stocholm (SE); BERG, Jan-Erik, SE-191 40 Sollentuna (SE); MEDBO, Jonas, SE-756 52 Uppsala (SE)
(74) Representative: Vejgaard, Christian
(86) International application number: PCT/EP2006/001166
(87) International publication number: WO 2007/090424

(56) References cited:
- EP-A- 1 124 391
- EP-A- 1 168 658
- EP-A- 1 562 257
- US-A- 6 049 705
- US-B1- 6 449 468

## Description

### TECHNICAL FIELD

The present invention relates to a wireless telecommunications device intended to communicate with a base station in a wireless telecommunications system. The device of the invention comprises at least a first radio chain and at least a first and a second antenna, with the antennas each having a certain radiation pattern. The at least two antennas are used for receiving and transmitting information to and from the base station.

### BACKGROUND ART

In wireless communications systems such as, for example, cellular telephony systems or Local Area Networks (LAN:s), the propagation channels, between so called access points in the system, such as base stations, and devices such as cell phones in the case of cellular telephony, or laptop computers in the case of LAN:s, may exhibit highly complex behaviour due to multi-path propagation.

This may affect the transmission quality of the wireless link, said transmission quality also possibly being affected by the orientation of the user equipment, since this will affect the polarization efficiency of a given antenna polarization.

Document EP-A-1168658 discloses a portable radio equipment having two orthogonal antennas.

### DISCLOSURE OF THE INVENTION

Thus, there is a need for a system or a method by means of which the communication quality in a wireless system such as, for example, cellular telephony systems or LAN:s could be improved by better knowledge of the propagation characteristics of the signals, mainly with respect to their polarization properties.

Such a system or method would also preferably be able to utilize knowledge of the orientation of a user device, in order to improve the communication quality.

This need is addressed by the present invention in that it discloses a wireless telecommunications device intended to communicate with an access point, such as a base station, in a wireless telecommunications system.

The device comprises at least a first radio chain and at least a first and a second antenna. The antennas each have a certain radiation pattern, and are used for receiving and transmitting information to and from the base station. The device of the invention includes a motion sensor for giving information on the spatial orientation of the device, and also includes means for utilizing the orientation information in order to control the total radiation pattern in the device's communication with the base station by controlling the phase and/or amplitude of signals associated with said first and second antennas.

Thus, by incorporating a motion sensor in the device of the invention, it has become possible to adapt the radiation pattern of the device in an intelligent manner, using the two or more antennas with which the device is equipped.

In a first embodiment of the invention, the first antenna of the device has a first polarization, and the second antenna has a second polarization, and the total radiation pattern of the device is controlled by using only one of the antennas, so that only one of said polarizations is used, the choice of polarization being adapted according to information regarding the polarization state of the base station's antenna or antennas.

In a second embodiment of the invention, the first and second antennas have the same polarization, and the total radiation pattern of the device is controlled by combining the radiation patterns of the two antennas to form a total radiation pattern with increased directivity in a desired direction and/or elevation, so called "beam forming" or "beam shaping".

The increased directivity of the second embodiment is adapted to the position of the base station antenna or antennas, and the increase in directivity is when compared to one of the antennas of the device.

Due to recent advances in technology, other examples of devices in which the invention may be used, apart from cellular telephony or laptop computers, include vehicles and clothing garments.

### BRIEF DESCRIPTION OF THE DRAWINGS

The invention will be described in more detail with reference to the appended drawings, in which
Fig 1 shows a system in which the invention may be applied, and
Fig 2 shows a device according to the invention, and
Figs 3 - 5 show the device of fig 2 in a coordinate system.

### EMBODIMENTS

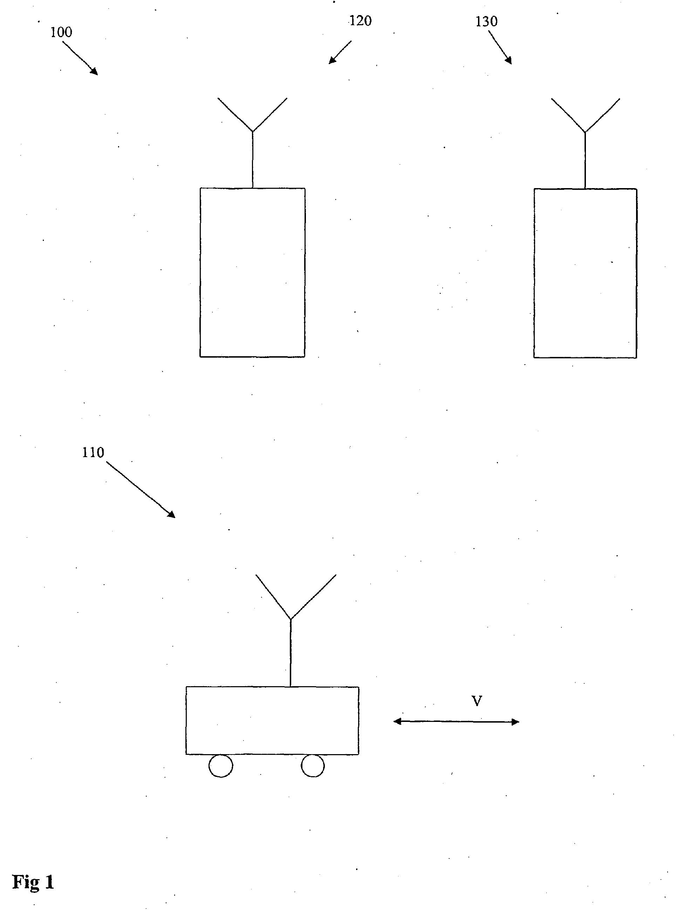

Fig 1 shows a schematic overview of a system 100 in which a device 110 of the invention may be used. The device of the invention may be applied in a multitude of systems for wireless telecommunication, such as, for example, cellular telephony, Local Area Networks (LAN:s) and the like. Thus, the system used to describe the invention should not be used to restrict the scope within which the invention may be applied.

In the system 100, there are a number of so called access points 120, 130, i.e. sites at which there is equipment for transmitting traffic between the users in the system and higher levels in the system, each access point suitably covering a certain area within the system 100. In a system for cellular telephony, to use one example, these points would correspond to the base stations of the system

Within the system, there are also a number of users with user equipment 110, one being shown in fig 1 by way of example. The user can move around in the system, as is symbolically indicated by the arrow "V". As a user with his equipment 110 moves around in the system, traffic to and from the equipment 110 is handled by one or more of the access points 120, 130, the choice of access point being made according to the signal strength or some other transmission quality measure.

Since the user can move around in the system with the equipment, the signals to and from the user will be subjected to multi-path fading, which will be caused, among other things, by obstacles in the system. Obstacles may also influence the polarization of the propagated signals, which will in turn influence the signal quality at both ends (in other words, the user equipment or the access point) of the wireless link.

Another factor which may also influence the transmission quality is the orientation of the user equipment, since this will influence the polarization efficiency for a given antenna polarization.

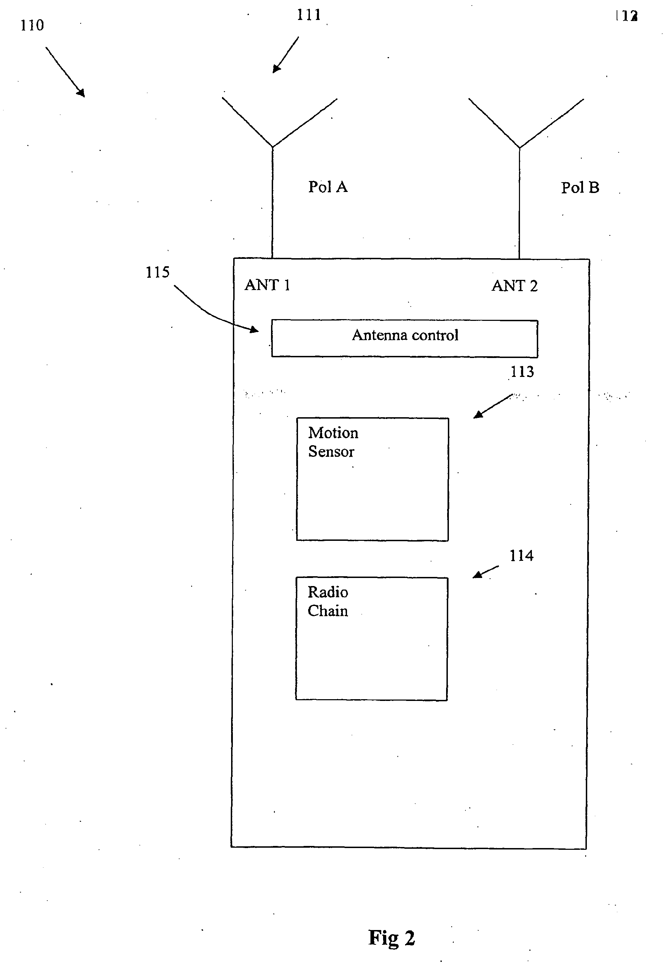

In fig 2, a schematic block diagram of a wireless telecommunications device 110 of the invention is shown. As was previously indicated in fig 1, the device 110 is intended to communicate with a base station 120, 130, or the like in a wireless telecommunications system 100, and comprises at least a first radio chain 114, and at least first 111 and second 112 antennas, each antenna having a certain radiation pattern, said antennas being used for receiving and transmitting information to and from the base station 120, 130.

The term "radio chain" is here intended to comprise an entire radio transmitter and/or a receiver, i.e. those components which convert the signal from baseband frequency, BB, to RF, radio frequency, and/or from RF to BB .

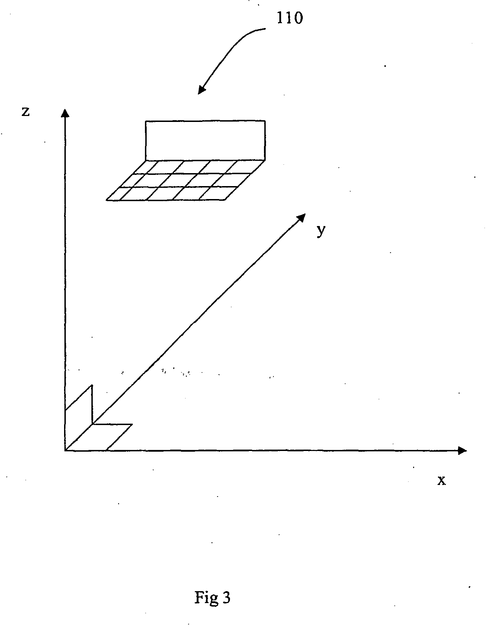

The device 100 of the invention also includes a motion sensor 113 for giving information on the spatial orientation of the device. The motion sensor is of a kind which as such is previously known, and will thus not be described extensively here. However, the motion sensor can provide information as to the spatial orientation of the device, which can be explained with reference to fig 3, which shows a three-dimensional right-handed Cartesian coordinate system, each axis, x, y, z, in the system being orthogonal to the two other axes.

In fig 3, a device 110 is also shown in the coordinate system. The motion sensor 113 in the device 110 can, as its output, give information as to the device's orientation, relative or absolute, with regard to the three axes. Thus, the orientation of the device 110 as well as movement of the device 110 can be detected by the motion sensor in three dimensions.

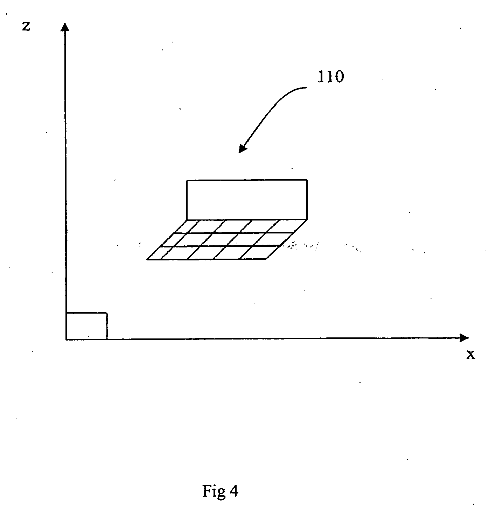

In some embodiments of the invention, a motion sensor which can only detect movement about one axis will be sufficient, which is shown in fig 4, only two mutually orthogonal axes, "x" and "z" being included in the drawing. Such sensors can be sufficient if a platform on which the antennas of the device are arranged can move essentially only in two directions, as in the case of, for example, a boat, which has essentially only horizontal movement, together with rotation about a vertical axis.

Returning now to fig 2, it can be seen that the device 110 also includes control means 115 for utilizing the orientation information from the motion sensor 113 to control the total radiation pattern in the device's 110 communication with the base station 111, 112. Since the total radiation pattern of the device comprises the radiation patterns of the first 111 and second 112 antennas, the total pattern is controlled by the control means controlling the relationship with respect to the amplitude and/or phase between the signals transmitted to and/or received from the antennas 111, 112, of the device 110.

Before the actual control of the radiation patterns of the antennas 111, 112, is described in more detail, one more fact will be pointed out: it may be more advantageous if a signal which is transmitted is either of horizontal or of vertical polarization.

Returning now to the examples of embodiments of the invention, in a first embodiment, the first 111 antenna has a first polarization and the second 112 antenna has a second polarization, the two polarizations being different from each other, and preferably being horizontal polarization and vertical polarization, respectively, in a device which has an orientation variation mainly about a vertical or a horizontal axis.

In order to achieve the best results when controlling the total radiation pattern of the device 110, and the polarizations of the individual antennas enable control of the polarization of the total radiation pattern, information is needed regarding the polarization conditions at the base station's (120, 130) antenna or antennas. This information can reach the control unit 115 in the device in a number of ways:
- The information regarding the polarization conditions at the base station's 120, 130, antenna or antennas can be communicated from the base station to users in the system. Thus, for example, control messages which are transmitted from a certain base station may contain information as to the polarization which is used at that base station, the polarization at a base station which is a fixed installation suitably being either horizontal or vertical, or in the case of multiple antennas being used at the base station, both.
- The information regarding the polarization conditions at the base station's (120, 130) antenna or antennas can be "a priori" information. This means that the polarization information is based on information from, for example, the operator of the system, and is programmed in the user equipment, for example when the equipment is first set up to be used in the system.
- Information regarding the polarization conditions at the access point, i.e. the base station, or on the down link for a given propagation channel .can be derived from measurements of the polarization of the signal received by the device of the invention.

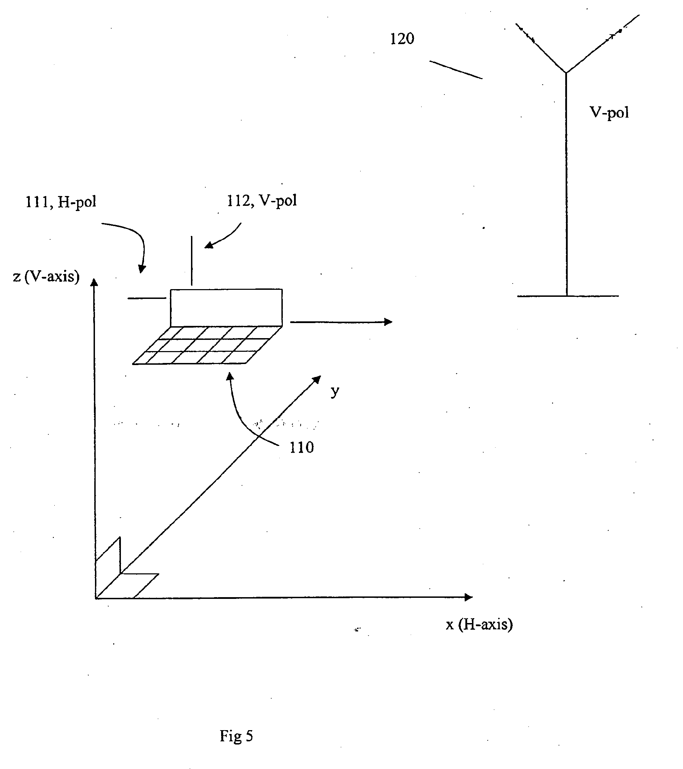

Thus, assuming that the polarization or set of polarizations of the base station antenna, and the effect of the propagation channel on the polarization, is known by the antenna control means 115 in the device, the polarization of the total radiation pattern of the device is controlled. Fig 5 shows a schematic view of this: a user terminal 110 is shown in a three-dimensional coordinate system, with three axes, denoted as x, y and z, with the z-axis being the vertical axis and the x- and yaxes being the axes of a horizontal plane. The device or user terminal 110 is in this case typically a laptop computer situated, for example, on a table.

The user terminal 110 is equipped with two antennas, one 111, of a first, preferably horizontal, polarization, and a second antenna 112 of a second, preferably vertical, polarization. In the system shown in fig 5, there is also a base station 120, with at least one antenna, in this example with vertical polarization.

In the example shown in fig 5, the user terminal 110 can basically remain,at one and the same distance from the base station and still be moved, including rotation, in a plane defined by two different axes, , i.e. those shown as "z" and "x" in the coordinate system. Below, in order to clarify a principle behind the invention, some basic types of movement of the antennas of the user terminal 111 will be described by way of example, as well as the polarization adaptation necessary for those movements.
- The device 110,and thus the antennas 111, 112, is rotated solely about the z-axis, i.e. the vertical axis. In this case, the polarization characteristics of the user terminal with respect to the coordinate system and the base station are maintained, so the only transmitted signal adaptation involving polarization could be to cease transmitting on the horizontally polarized antenna 111, and only use the antenna 112 for communication with the base station, or vice versa
- The device 110, along with its antennas 111, 112, is rotated solely about the x-axis, i.e. the horizontal axis. In this case, if the device is rotated ninety degrees, both of the antenna polarizations will be in the x-y plane, i e. in a horizontal plane, and there will thus be no possibility of transmitting in a vertical polarization. If the rotation is larger or smaller than ninety degrees, at least the second antenna will maintain a degree of vertical polarization with respect to the base station 120, and it will thus be useful to transmit with that antenna.
- The device 110 is rotated solely about the y-axis. In the extreme case, in other words if the rotation is ninety degrees, it will be realized that the antenna 111, that is the antenna which in the "nominal" position of the terminal is the horizontally polarized antenna, will now be the antenna which is best suited to transmit and receive from /to the base station, since it will be vertically polarized with refernce to a global coordinate system. Thus, in this case, the polarization adaptation could involve ceasing to transmit with the antenna 112, and only use the antenna 111 for communication with the base station.

In the three examples above, the movement of the user terminal 110 was about only one of the axes (x, y or z) in the coordinate system. Naturally, the user terminal 110 can also be moved in a way that involves movement about two or three of the axes at the same time. The positions of the user terminal which would result from such combined movements are too numerous to list here, but the principle which would be employed by the antenna control unit 115 is the following: Is the polarization which is obtained by the antenna or combination of antennas used at present the optimal one, or is there a polarization which can be obtained which is better adapted to the position of the user terminal 110 with knowledge of the polarization of the antenna of the base station 120 ?

If the answer to the question is no, then no action is taken by the antenna control means 115. If on the other and, the answer to the question is yes, then the antenna control means 115 sets the effective polarization of the device 110 to one which is adapted to the base station, including or excluding the effects of the propagation channel by using for each of the antennas of the device 110 amplitude and/or phase weight factors such that the absolute value of the product of the complex conjugate of the device's polarization vector and the polarization vector of the base statin 120 is optimal in the sense of optimising system performance.

In a second embodiment of the invention, the first 111 and the second 112 antennas of the device have the same polarization, and the total radiation pattern of the device is controlled by the antenna control means 115 by combining the radiation patterns of the two antennas 111, 112, to form a total radiation pattern with increased gain or directivity in a desired direction (azimuth angle) and/or elevation angle.

The increased gain or directivity is adapted to the actual or perceived position of the base station 120, 130, antenna or antennas, and the increase in gain or directivity is in comparison to the gain or directivity which would have been obtained using only one of the antennas 111, 112, of the device. Thus, a total radiation pattern is created which has improved characteristics (as compared to only one of the antennas 111,112) for the device orientation given by the motion sensor 113.

As mentioned previously , the solution with increased directivity is applicable in a device which has more than one antenna with one and the same polarization. The device may, however, have one or more radio chains.

The increased directivity is thus obtained using so called beam forming, i.e. a beam is created which is directed towards the base station antenna or antennas. The beam forming is obtained using methods for this which as such are known, and which will thus not be commented upon at length here. However, known methods for beam forming using two or more antennas which transmit or receive the same signal include influencing the phase and/or amplitude relationship between the signals received and/or transmitted by the antennas of the device.

Accordingly, in the beam forming version of the invention as well, at least two antennas and one radio chain are used, so that said radio chain can be connected to a plurality of antennas. In a device of the invention which has more than one radio chain, switching means may be used for connecting a plurality of antennas (or antenna ports or connectors) to a plurality of radio chains.

In this second embodiment of the invention, where beam forming is carried out, information is also needed by the device 110 as to the direction of the base station antenna with respect to the position of the device 110. This information can be obtained in a number of different ways, for example direction estimation based on the strength of received signals or, in a particular embodiment, the user terminal device can be equipped with a GPS receiver. In the latter embodiment, the GPS data is used together with information stored in the user terminal as to the position of the base station antenna. This position can be obtained in an number of ways, the base station can, for example, transmit its coordinates to the user terminals in control signals from the base station to the user terminals, or the position of the base station antenna can have been calculated at a previous point in time by a calculation means in the user terminal, using the strength of received signals.

## Claims

1. A wireless telecommunications device (110) intended to communicate with an access point, such as a base station, (120, 130) in a wireless telecommunications system(100), the device (110) comprising at least a first radio chain (114) and at least a first (111) and a second (112) antenna, which antennas each have a certain radiation pattern, and which are used for receiving and transmitting information to and from the base station (120, 130), said device (110) being **characterized in that** it includes a motion sensor (113) for giving information on the spatial orientation of the device, and **in that** the device additionally includes means (115) for utilizing said orientation information in order to control the total radiation pattern in the device's communication with the base station by controlling the phase and/or amplitude of signals associated with said first (111) and second (112) antennas, where the first antenna (111) has a first polarization and the second antenna (112) has a second polarization, and in which device (110) the total radiation pattern is controlled according to information regarding the polarization state of the base station's (120, 130) antenna or antennas, where the information regarding the polarization conditions at the base station's (120, 130) antenna or antennas either is information communicated from the base station to users in the system, or is a priori information.

2. The device (110) of claim 1, in which only one of the antennas (112,12) is used, by means of which only one polarization is used, said polarization being adapted according to said information.

3. The device (110) of claim 1, in which the second polarization is different from the first polarization, and in which device the total radiation pattern is controlled by combining the radiation patterns of the first (111) and second (112) antennas to obtain a third resulting polarization, said third polarization being adapted according to said information.

## Patentansprüche

1. Drahtlose Komnmnikationsvorrichtung (110), vorgesehen zur Kommunikation mit einem Zugangspunkt wie einer Basisstation (120, 130) in einem drahtlosen Kommunikationssystem (100), die Vorrichtung (110) mindestens eine erste Funkkette (114) und mindestens eine erste (111) und eine zweite (112) Antenne umfassend, wobei die Antennen jeweils eine bestimmte Strahlungscharakteristik und zum Empfangen und Übertragen von Informationen zu und von der Basisstation (120,130) verwendet werden, die Vorrichtung (110) **dadurch gekennzeichnet, dass** sie einen Bewegungssensor (113) zum Bereitstellen von Informationen über die räumliche Ausrichtung der Vorrichtung enthält, und **dadurch**, dass die Vorrichtung zusätzlich Mittel (15) zum Nutzen der Ausrichtungsinformationen enthält, um die gesamte Strahlungscharakteristik in der Kommunikation der Vorrichtung mit der Basisstation zu steuern, indem die Phase und/oder Amplitude der Signal, die mit den ersten (111) und zweiten (112) Antennen assoziiert sind, gesteuert wird, wobei die erste Antenne (111) eine erste Polarisation und die zweite Antenne (112) eine zweite Polarisation aufweist, und wobei in der Vorrichtung (110) die gesamte Strahlungscharaktertstik gemäß Informationen hinsichtlich des Polarisationszustands der Antenne oder Antennen der Basisstation (120, 130) gesteuert wind, wobei die Informationen hinsichtlich der Polarisationszustände an der Antenne oder den Antennen der Basisstation (120, 130) entweder Informationen sind, die von der Basisstation an Benutzer in dem System kommuniziert werden, oder Apriori-Informationen sind.

2. Vorrichtung (110) nach Anspruch 1, in der nur eine der Antennen (112, 12) durch Mittel, von dem nur eine Polarisation verwendet wird, verwendet wird, wobei die Polarisation gemäß den Informationen angepasst wird.

3. Vorrichtung (110) nach Anspruch 1, in der die zweite Polarisation von der ersten Polarisation verschieden ist, und wobei in der Vorrichtung die gesamte Strahlungscharakteristik durch Kombinieren der Strahlungscharakteristika der ersten (111) und zweiten (112) Antenne gesteuert wird, um eine dritte resultierende Polarisation zu erhalten, wobei die dritte Polarisation gemäß den informationen angepasst wird.

## Revendications

1. Dispositif de télécommunication sans fil (110) destiné à communiquer avec un point d'accès, par exemple, une station de base (120, 130) dans in système de télécommunication sans fil (100), le dispositif (110) comprenant au moins une première chaîne de relais radio (114) et au moins des première (111) et seconde (112) antennes, lesquelles antennes présentent chacune un diagramme de rayonnement spécifique, et lesquelles antennes sont utilisées pour recevoir et transmettre des informations vers et à partir de la station de base (120, 130), ledit dispositif (110) étant **caractérisé en ce qu'**il comprend un capteur de mouvement (113) destiné à émettre des informations sur l'orientation spatiale du dispositif, et **en ce que** le dispositif comprend en outre des moyens (115) pour utiliser lesdites informations d'orientation afin de commander le diagramme de rayonnement total dans la communication du dispositif avec la station de base, en commandant la phase et/ou l'amplitude de signaux associés aux première (111) et seconde (112) antennes, où la première antenne (111) présente une première polarisation et la seconde antenne (112) présente une seconde polarisation, et dans lequel dispositif (110) le diagramme de rayonnement total est commandé selon des informations connexes à l'état de polarisation de l'antenne ou des antennes de la station de base (120, 130), où les informations concernant les états de polarisation au niveau de l'antenne ou des antennes de la station de base (120, 130) sont soit des informations communiquées de la station de base à des utilisateurs dans le système, soit des informations a priori.

2. Dispositif (110) selon la revendication 1, dans lequel seule l'une des antennes (112, 12) est utilisée, au moyen de laquelle une seule polarisation est utilisée, ladite polarisation étant adaptée selon lesdites informations.

3. Dispositif (110) selon la revendication 1, dans lequel la seconde polarisation est différente de la première polarisation, et dans lequel dispositif le diagramme de rayonnement total est commandé en associant les diagrammes de rayonnement des première (111) et seconde (112) antennes pour obtenir une troisième polarisation résultante, ladite troisième polarisation étant adaptée selon lesdites informations.
